# EUROPÄISCHE PATENTSCHRIFT

(11) **EP 0 394 551 B1**
(45) Veröffentlichungstag und Bekanntmachung des Hinweises auf die Patenterteilung: **04.08.1993**
(21) Anmeldenummer: 89119464.9
(22) Anmeldetag: 20.10.1989
(51) Int. Cl.: B60J 3/02

(54) **Sonnenblende für Kraftfahrzeuge**
Sunvisor for motor vehicles
Pare-soleil pour véhicules automobiles

(30) Priorität: 25.04.1989 DE 3913562
(43) Veröffentlichungstag der Anmeldung: 31.10.1990
(73) Patentinhaber: Urban, Willy, D-25813 Husum (DE)
(72) Erfinder: Urban, Willy, D-25813 Husum (DE)

(56) Entgegenhaltungen:
- DE-A- 3 420 730
- US-A- 1 932 475

## Beschreibung

Die Erfindung bezieht sich auf eine Sonnenblende für Autos, mit einem Gehäuse (1), das um eine Achse schwenkbar am Autodach angeordnet ist, wobei im Innern des Gehäuses (1) eine Verlängerungsfolie angeordnet ist, welche herausgezogen bzw. hineingeschoben werden kann. Eine Sonnenblende der gattungsgemäßen Art ist in der DE-A-3 420 730 beschrieben.

Gegenüber diesem Stand der Technik liegt der Erfindung die Aufgabe zugrunde, eine Sonnenblende der eingangs bezeichneten Art zu verbessern. Diese Aufgabe wird durch die im Anspruch 1 definierten Maßnahmen gelöst.

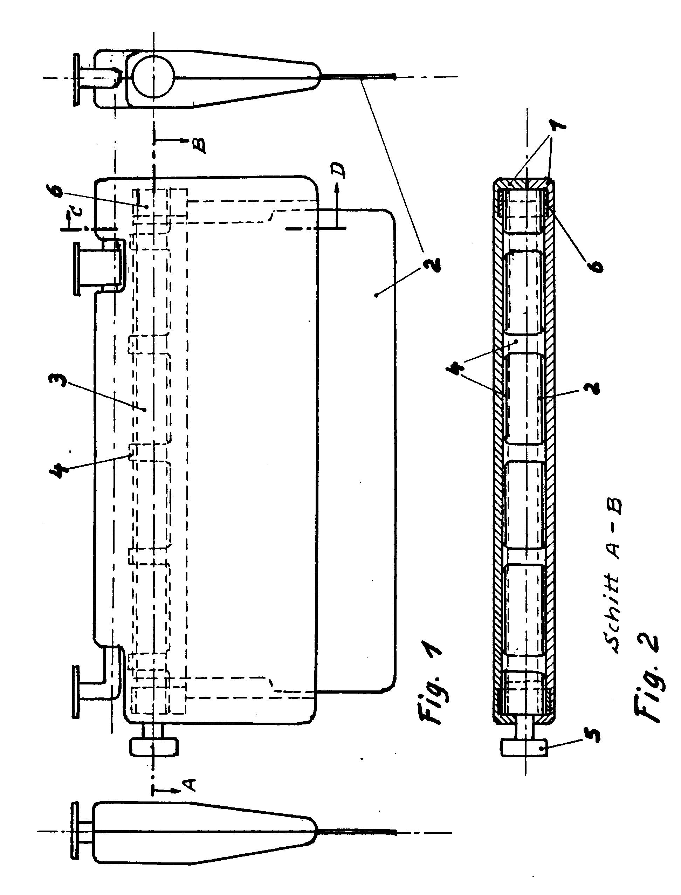

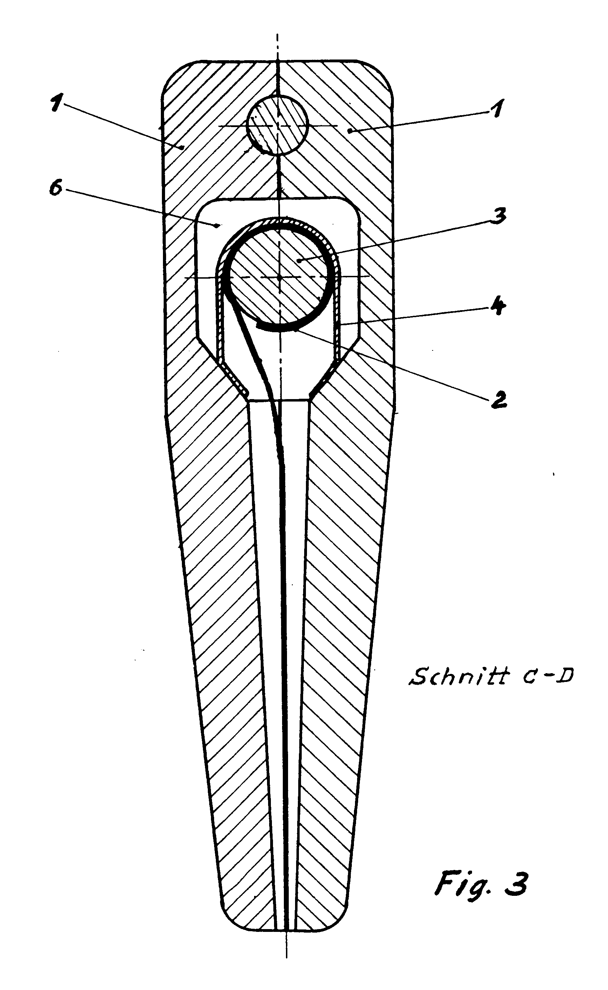

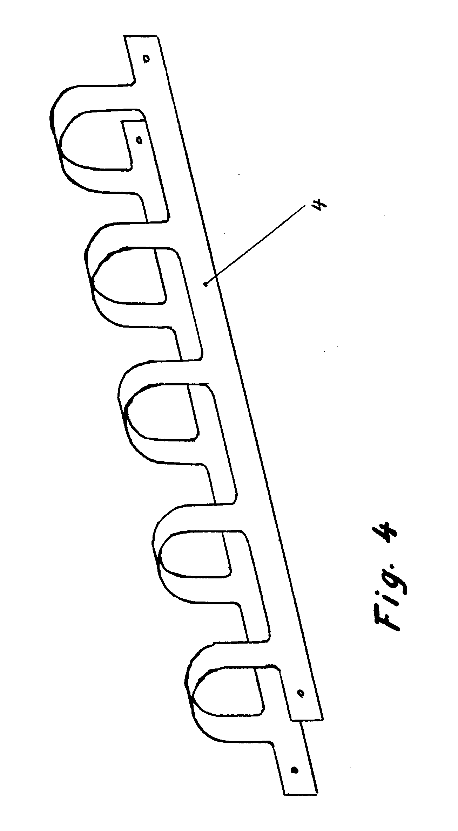

Die Erfindung wird im folgenden anhand der Zeichnungen (Fig. 1 bis 4) erläutert. Wie in Fig. 1 und 2 ersichtlich, ermöglicht es die Erfindung, durch Drehung der Folienwalze (3) mittels Drehgriff (5), eine im Innern der Sonnenblende angebrachte Folie (2) nach unten zu verschieben und dadurch die Sonnenblendung zu beseitigen. Hat z. B. die Folienwalze (3) einen Durchmesser von 16 mm, dann kann durch nur 1 Umdrehung der Folienwalze (3), die Folie (2) um ca. 50 mm nach unten verschoben werden. Diese Verlängerung der Sonnenblende dürfte in den meisten Fällen ausreichen. Durch einen größeren Durchmesser der Folienwalze (3), wird auch eine größere Verschiebung der Folie (2) erreicht.
Wird die Verlängerung der Sonnenblende nicht benötigt, bleibt die Folie (2) aufgerollt im Innern des Gehäuses (1) und ist nicht sichtbar.
Der Drehgriff (5) für die Einstellung der Folie (2) befindet sich direkt an der Sonnenblende. Er ist deshalb durch Tastsinn leicht zu finden, ohne den Blick vom Straßenverkehr wenden zu müssen.
Da die Einstellung der Folie (2) durch Drehung erfolgt, ist dafür keine Geschicklichkeit erforderlich. Sie kann schnellstens bei jeder Fahrgeschwindigkeit ohne Fahrtunterbrechung erfolgen.
Das bisherige Erscheinungsbild der Sonnenblende wird durch die Verbesserung kaum schlechter. Die Anbringung kann wie bisher am Autodach erfolgen.

Das Gehäuse (1) der Sonnenblende kann aus dem gleichen Material wie bei den bisher üblichen Sonnenblenden verwendet werden.

In Fig. 3 ist die Sonnenblende im Schnitt C - D in einem größeren Maßstab aufgeführt, um die Funktion der Folien- Auf- und Abwicklung und die Anbringung des Folienleitbleches (4) deutlicher sehen zu können.

In Fig. 4 ist das Folienleitblech (4) zur besseren Verdeutlichung perspektivisch dargestellt. Um eine möglichst geringe Reibung zwischen Folienleitblech (4) und Folie (2) zu erreichen, wird die Folie (2) durch nur schmale Blechstreifen geführt.

Bei der Erfindung handelt es sich um die Umwandlung der bisher üblichen und nach meiner Kenntnis in jedem Auto vorhandenen starren Sonnenblende, in eine variable Sonnenblende.

### Bezugszeichen

- 1 =: Gehäuse der Sonnenblende besteht aus 2 Hälften
- 2 =: Folie
- 3 =: Folienwalze
- 4 =: Folienleitblech
- 5 =: Drehgriff
- 6 =: Lagerblock für die Folienwalze, 2 Stück, je 1 Stück links und rechts

## Patentansprüche

1. Sonnenblende für Autos, mit einem Gehäuse (1), das um eine Achse schwenkbar am Autodach angeordnet ist, wobei im Innern des Gehäuses (1) eine Verlängerungsfolie (2) angeordnet ist, welche herausgezogen bzw. hineingeschoben werden kann, dadurch gekennzeichnet, daß die Verlängerungsfolie (2) im Innern des Gehäuses (1) an einer Folienwalze (3) aufwickelbar ist und über ein Leitblech (4) geführt wird, und daß die Folienwalze (3) durch einen an einem ihrer Enden angeordneten Drehgriff (5) einstellbar ist.

2. Sonnenblende nach Anspruch 1, dadurch gekennzeichnet, daß eine undurchsichtige Verlängerungsfolie (2) verwendet wird.

3. Sonnenblende nach Anspruch 1, dadurch gekennzeichnet, daß eine durchsichtige, dunkel getönte Verlängerungsfolie (2) verwendet wird.

## Claims

1. Sun visor for automobiles with a housing (1) fitted on the roof of the automobile, traversable around its axis, in which an extension foil (2) is fitted in the inside of the housing (1); the extension foil can be pulled out or slid in, respectively, characterized by the fact that the extension foil (2) can be wound in the inside of the housing (1) around a foil shaft (3) and being guided over a guide plate (4) and that the foil shaft (3) can be adjusted by a turning handle (5) fitted on the ends of the foil shaft.

2. Sun visor as per Claim 1 characterized by an opaque extension foil (2) being used.

3. Sun visor as per Claim 1 characterized by a transparent, dark-tinted extension foil (2) being used.

## Revendications

1. Pare-soleil pour voitures automobiles avec un boitier (1), fixé au toit de l'automobile par un axe pivotant, dont l'intérieur (1) est équipé d'une feuille de rallonge (2) amovible, caractérisée de cette manière que la feuille de rallonge (2), se trouvant à l'intérieur du boitier (1), peut être enroulée sur un cylindre (3), que la feuille de rallonge (2) est guidée par une tôle de guidage (4) et que le cylindre portant la feuille (3) est réglable par une poignée tournante (5) fixée à une extrémité dudit cyclindre (3).

2. Pare-soleil correspondant à la demande selon 1, indiquée ci-dessus, caractérisé de cette manière que la feuille de rallonge (2) est transparente.

3. Pare-soleil correspondant à la demande selon 1, indiquée ci-dessus, caractérisé de cette manière que la feuille de rallonge (2) est transparente et teintée en nuances foncées.
